# EUROPÄISCHE PATENTSCHRIFT

(11) **EP 1 838 835 B1**
(45) Veröffentlichungstag und Bekanntmachung des Hinweises auf die Patenterteilung: **16.06.2010**
(21) Anmeldenummer: 06700569.4
(22) Anmeldetag: 11.01.2006
(51) Int. Cl.: C12G 3/07

(54) **VERFAHREN ZUM VEREDELN VON W[SSRIGEN ZUBEREITUNGEN**
METHOD FOR TREATING AQUEOUS PREPARATIONS
PROCEDE D'AMELIORATION DE PREPARATIONS AQUEUSES

(30) Priorität: 13.01.2005 DE 102005002809
(43) Veröffentlichungstag der Anmeldung: 03.10.2007
(73) Patentinhaber: Hartrampf, Klaus C., 65193 Wiesbaden (DE)
(72) Erfinder: LABER, Heinz, 65366 Geisenheim-Johannisberg (DE)
(74) Vertreter: Herden, Andreas F.
(86) Internationale Anmeldenummer: PCT/EP2006/000179
(87) Internationale Veröffentlichungsnummer: WO 2006/074910

(56) Entgegenhaltungen:
- DD-A1- 239 606
- DE-A1- 2 829 964
- US-A- 4 463 024
- US-B1- 6 203 836
- PATENT ABSTRACTS OF JAPAN Bd. 008, Nr. 093 (C-220), 27. April 1984 (1984-04-27) & JP 59 011159 A (KIKKOMAN SHOYU KK), 20. Januar 1984 (1984-01-20)

## Beschreibung

Die Erfindung betrifft ein Verfahren zur Veredelung von wässrigen Zubereitungen, sowie ein derart hergestellter Extrakt zum Veredeln von wässrigen Zubereitungen und dessen Verwendung.

Um einer wässrigen Zubereitung, insbesondere alkoholhaltigen Getränken, wie beispielsweise Wein oder Whisky einen besonderen Geschmack und Geruch zukommen zu lassen, sind bereits verschiedene Verfahren bekannt. So ist es normalerweise üblich, den verschiedenen Getränken über eine natürliche Alterung, bevorzugt in Eichenfässern, verbesserte Geschmackseigenschaften zukommen zu lassen. Da dies aber einen erhöhten Zeitaufwand und damit verbunden erhöhte Kosten bedeutet, wurden seit langer Zeit verschiedene Methoden und Verfahren entwickelt, um die natürliche Alterung zu beschleunigen und den typischen Geschmack und Geruch, der durch Lagerung in Eichenfässern entsteht, nachzuahmen, und somit den sensorischen Eindruck der einzelnen Getränke zu verbessern.

Die Lagerung von Spirituosen und Weinen ist je nach Art, Eigenschaft und gesetzlichen Vorschriften unterschiedlich. So kann die Lagerung in verschiedenen Behältnissen, wie beispielsweise aus Edelstahl, Keramik, Glas oder Holz erfolgen. Es laufen bei der Lagerung Prozesse ab, die überwiegend einen positiven Einfluß auf das sensorische Geruchs- und Geschmacksempfinden haben. Die Prozesse unterteilen sich bei der Lagerung in Holzgefäßen, wie Fässern, einmal in Extraktionsvorgänge von bereits vorhandenen Inhaltsstoffen und zum anderen in Migrationsvorgänge von Stoffen, die erst sekundär bei der Lagerung gebildet werden.

Hierbei hat sich also gezeigt, dass die Bestandteile des Holzes entscheidend zum Geschmack und Geruch beitragen. Holz besteht überwiegend aus organischen Verbindungen. Diese Verbindungen setzen sich zumeist aus 50% Kohlenstoff, 43% Sauerstoff, 6% Wasserstoff und etwa 1% Kationen zusammen. Die Zusammensetzung des Holzes schwankt je nach Baum- und Holzart. Aus den bereits genannten Elementen sind auch die drei Hauptbestandteile des Holzes, nämlich Zellulose, Holzpolyosen und Lignin, sowie die Nebenbestandteile, die sogenannten akzessorischen Bestandteile zusammengesetzt. Die Zellulose bildet die Gerüstsubstanz der unverholzten Zellwand und besteht aus einem fibrillenartigen Makromolekül. Die Holzpolyosen, früher auch Hemizellulose genannt, unterscheiden sich von der reinen Zellulose dadurch, dass sie sich leichter hydrolisieren lassen. Holzpolyosen sind Polysaccharide, zu denen unter anderem Pentosane, Hexosan und amorphe Polyosen gehören. Das im Holz vorhandene Lignin tritt nicht als selbständiger Baustein auf, sondern ist ein Begleiter der Zellulose. Lignin ist ein amorphes Makromolekül und besteht zumeist aus 60 % aus Kohlenstoff, 34% aus Sauerstoff und 6% aus Wasserstoff. Dies hat zur Folge, dass ligninreiche Hölzer kohlenstoffreicher sind als ligninarme. Lignin läßt sich nicht durch Säuren hydrolisieren und hat einen geringen Polymerisierungsgrad. Die Bausteine des Lignins sind nicht wie bei der Zellulose zu langen Ketten aneinandergereiht, sondern sind zu einem dreidimensionalen Molekül vernetzt. Eine Isolierung des Lignins aus der Zellwand ist nicht möglich, ohne dass das Lignin angegriffen und in seiner ursprünglichen Beschaffenheit zerstört wird. Lignin ist in die Interzellularräume eingelagert und dient dort als eine Art Stützsubstanz.

Extrakte und deren Herstellung, die alkoholischen Getränken Merkmale verleihen sollen, die einer natürlichen Lagerung und Alterung gleich oder ähnlich sind, sind immer noch sehr umständlich und zeitintensiv zu gewinnen und herzustellen.

Schon seit langem wurde versucht, Verfahren zu entwickeln, die die natürliche Alterung und Lagerung verkürzen oder sogar ersetzen können.

Bereits in der DE 353735 von 1922 wird ein Verfahren zur Verbesserung von Weinen, Spirituosen und ähnlichen Flüssigkeiten beschrieben. Hier wird eine Extraktion von Eichenholz zum Klären von Wein vorgeschlagen. Das hier beschrieben Verfahren ist jedoch sehr umständlich und zeitintensiv.

DE 2829964 beschreibt die Aromatisierung vom Branntwein mit Eichenholzextrakt.

Die DE 100 08 759 beschreibt beispielsweise ein Verfahren zur Veredelung von Branntweinen, bei dem während oder nach dem Abfüllvorgang des Branntweines, Holz in beliebiger Form und Art in die Flasche hinzugegeben wird, um so eine Verbesserung des Geschmacks zu erzielen. Es ist bei diesem Verfahren nicht möglich, genaue Aussagen über den Geschmack des Getränkes zu treffen, da dieser stark davon beeinflußt wird, wie lange die Flasche gelagert wird, und welches Holz verwendet wird.

In der DD 239 606 ist ebenfalls ein Verfahren zur Veredelung von Doppelkorn und Kornbrand beschrieben. Das dort geschilderte Verfahren soll durch einen natürlichen, aromatisierten Holzextrakt die Reifezeit für Korn verkürzen und einen typischen Eichengeschmack erzeugen. Dazu werden Holzspäne bei einer Temperatur von 120 bis 180°C über eine Zeitdauer von 20 bis 150 Stunden trocken erhitzt und anschließend wird eine Extraktion mittels Kornfeindestillat bei Raumtemperatur durchgeführt. Das dort beschriebe Verfahren eignet sich nur für Korn und ist sehr zeitaufwendig.

Aufgabe der Erfindung ist es daher, ein Verfahren zum Veredeln von wässrigen Zubereitungen bereitzustellen, welches einfach anzuwenden, schnell zu realisieren und besonders kostengünstig ist, und zu einer Verbesserung des Geschmacks der wässrigen Zubereitungen, insbesondere von alkoholischen Getränken beiträgt, sowie derart hergestellte wässrige Zubereitungen.

Diese Aufgabe wird bereits in höchst überraschender Weise mit einem Verfahren nach Anspruch 1 gelöst, sowie durch Getränke gemäß der Ansprüche 22 und 23 und einem Extrakt gemäß Anspruch 21.

Dementsprechend umfaßt das erfindungsgemäße Verfahren zum Veredeln von wässrigen Zubereitungen, insbesondere von alkoholischen Getränken, das Bereitstellen von zerkleinertem Holz und das Reinigen des zerkleinerten Holzes. Anschließend folgt ein Autoklavieren des Holzes und hinterher erfolgt eine Extraktion von Bestandteilen des Holzes, wobei die Extraktion mit ähnlichen Extraktionsmitteln wie die wässrige Zubereitung und/oder der zu veredelnden wässrigen Zubereitung erfolgt, und wobei das Autoklavieren des Holzes in sauerstofffreier Atmosphäre mittels Inertgas in einem Autoklaven erfolgt.

Die Erfinder haben herausgefunden, dass dieses Verfahren die Herstellung eines Extraktes ermöglicht, das zu einer deutlichen Geschmacksverbesserung einer wässrigen Zubereitung beiträgt. Es ist mittels dieses Verfahrens möglich, wässrigen Zubereitung, insbesondere alkoholischen Getränken, einen sensorischen Eindruck zu verleihen, der einer natürlichen Alterung und Lagerung in Eichenfässern entspricht oder sehr nahe kommt. Auch hat sich ferner gezeigt, dass dieses Verfahren mit einfachen Mitteln durchgeführt werden kann und somit kostengünstig ist.

Es hat sich gezeigt, dass es besonders vorteilhaft ist, wenn als zerkleinertes und gereinigtes Holz, Holzschnitzel und/oder Holzchips verwendet werden. Das auf diese Weise zerkleinerte Holz kann hinterher besonders gut weiterverarbeitet werden, da es handlicher ist. Zusätzlich bedeutet eine Zerkleinerung des Holzes eine größere Angriffsfläche während des nachfolgenden Autoklavierens.

Erfindungsgemäß wird das zerkleinerte Holz mit kaltem Wasser gereinigt. Durch ein Reinigen mit kalten Wasser wird sichergestellt, dass keine weiteren unerwünschten Bestandteile aus dem Holz herausgelöst werden und somit die akzessorischen Bestandteile und sonstigen Bestandteile vorerst im Holz erhalten bleiben.

Das Autoklavieren des Holzes erfolgt in einer, mittels Inertgase erzeugten sauerstofffreien Atmosphäre in einem Autoklaven. Ferner reagieren diese Gase nicht mit den Bestandteilen des Holzes. Dieses spezielle Verfahren ermöglicht, dass Bestandteile des Holzes während des Autoklavierens steamgecrackt werden. Es ermöglicht hinterher eine bessere Extraktion der Bestandteile des Holzes.

Es hat sich ferner gezeigt, dass es von Vorteil ist, wenn als Inertgase Stickstoff, Argon oder Helium verwendet werden. Diese Gase stellen sicher, dass eine sauerstofffreie Umgebung im Autoklaven erzeugt wird und somit eine unerwünschte Oxidation vermieden werden kann. Es sind freilich auch andere Edelgase denkbar, um diesen Zustand herstellen zu können, allerdings sind diese wesentlich teuerer.

Es hat sich als vorteilhaft herausgestellt, wenn der Autoklav teilweise mit einer wässrigen Lösung, bevorzugt Wasser, befüllt wird, und über ein wasserdampfgesättigtes Milieu verfügt.

Besonders vorteilhaft ist es, wenn bei dem Autoklavieren des Holzes ein langsames, homogenes Erhitzen des Holzes, mit einer Rate in etwa von 2 Kelvin pro Minute erfolgt. Dadurch wird gewährleistet, dass das Lignin in dem zerkleinerten Holz teilweise depolymerisiert und anschließend aus dem zerkleinerten Holz gelöst werden kann.

Es hat sich gezeigt, dass das Autoklavieren des Holzes idealerweise bei einer Temperatur von 90°C bis 140°C, vorzugsweise von 110°C bis 135°C, besonders bevorzugt von 120°C bis 130°C erfolgt. Diese Temperatur stellt ein schonendes Erhitzen des zerkleinerten Holzes und ein Depolymerisieren des Lignins sicher.

Ferner ist es von Vorteil, wenn das Holz, also das zerkleinerte Holz, oberhalb der wässrigen Lösung in dem Autoklav angeordnet wird und somit das Holz nicht mit der wässrigen Lösung in Kontakt gebracht wird, um so eine vorzeitige Extraktion der Bestandteile und ein Aufquellen des Holzes zu vermeiden. Hierbei kann das Holz auf einem Sieb angeordnet werden, wobei aber auch jede weitere Befestigung denkbar ist, die geeignet ist, um das Holz darauf anzuordnen und einen Abstand zu der wässrigen Lösung zu gewährleisten.

Eine bevorzugte Ausführungsform der Erfindung sieht vor, dass der Druck des Autoklaven bevorzugt zwischen 1,5 bar und 2 bar, besonders zwischen 1,7 bar und 1,9 bar, eingestellt wird.

Es hat sich gezeigt, dass das Holz für 1 Stunde bis 3 Stunden, bevorzugt für 1,5 Stunden bis 2,5 Stunden, autoklaviert wird. Diese Zeitspanne reicht bereits aus, das zerkleinerte Holz ausreichend zu steamcracken, also die Bestandteile, wie beispielsweise das Lignin zu depolymerisieren, und trägt auf Grund seiner geringen Dauer dazu bei, dass Zeit und somit auch Kosten eingespart werden können.

Am Ende des Autoklavierens erfolgt, gemäß einer bevorzugten Ausführungsform der Erfindung, ein schlagartiges Entspannen des Autoklaven. Hierdurch wird erreicht, dass die Zellen des Holzes aufreißen. Im "Sumpf" des Autoklaven landen Phenole und Gerbstoffe, die verworfen werden.

In einer erfindungsgemäßen Weiterentwicklung wird die Extraktion von Bestandteilen aus dem autoklavierten Holz in einer geeigneten Vorrichtung zur Extraktion, bevorzugt einem Perkulator oder einer Rieselkolonne durchgeführt.

Dabei erfolgt die Extraktion derart, dass zur Extraktion ähnliche Extraktionsmittel wie die wässrige Zubereitung und/oder die zu veredelnde wässrige Zubereitung genommen werden.

Der gewonnene Extrakt kann dann, genau dosiert, dem zu veredelnden Endprodukt zugeführt werden. Hierdurch wird ermöglicht, dass der Eindruck des Alters der wässrigen Lösung genau steuerbar ist, nämlich durch die Menge des Perkulats, welches der wässrigen Flüssigkeit zugegeben wird.

Wie bereits erwähnt, ist es hier vorteilhaft, wenn beispielsweise ein Rotwein hinterher veredelt werden soll, dieser gleiche Rotwein auch als Extraktionsmittel verwendet wird.

Es ist von Vorteil, wenn die Extrationstemperatur auf einen Wert von < 35°C, bevorzugt 20°C, bis 30°C eingestellt wird. Dadurch gelangen Stoffe, die durch Wärme aus dem zerkleinerten Holz herausgelöst werden könnten, nicht in das zu veredelnde Produkt oder den Extrakt. Es erfolgt somit eine Perkulation auf nahezu kaltem Wege.

In einer bevorzugten Ausführungsform sieht die Erfindung vor, dass während der Extraktion ein Teilstrom abgeführt wird, der der zu veredelnden Flüssigkeit direkt zugeführt wird. Hierdurch kann bereits während der Extraktion die wässrige Flüssigkeit veredelt werden und es ist kein weiterer Verfahrensschritt notwendig, was zu einer Kostenreduzierung beitragen kann.

Die Erfindung sieht ferner vor, dass die aus der Extraktion gewonnenen Bestandteile der zu veredelnden wässrigen Zubereitungen erst hinterher zugegeben wird. Dadurch wird ermöglicht, dass erst der Extrakt gewonnen wird, und dieser erst, wenn notwendig, der zu veredelnden Flüssigkeit zugeführt wird, Es ist hier möglich, dass also der Extrakt gewonnen wird und dieser dann separat vermarktet wird.

Das bedeutet auch, dass der Extrakt somit an einer separaten Produktionsstelle gefertigt werden kann, Da nur der Extrakt zur Veredelung gewonnen werden kann und nicht sofort die wässrige Flüssigkeit veredelt werden muß, bedeutet dies auch, dass die Transportkosten geringer werden.

Um einen Extrakt zu erlangen, welcher besonders positive Eigenschaften hat und einer natürlichen Lagerung ähnelt oder gleicht, hat es sich als vorteilhaft herausgestellt, wenn als zerkleinertes Holz vorzugsweise ein Hartholz verwendet wird. Ein Hartholz zeichnet sich durch einen großen Anteil an Fasern und Lignin, sowie durch eine enge Gefäßstruktur aus. Dadurch steigt der Härtegrad und die Rohdichte des Holzes. Typischerweise bezeichnet man Hölzer mit einer Rohdichte von > 0,55 g/cm³ als Harthölzer. Hölzer mit einer Rohdichte von < 0,55 g/cm³ sind sogenannte Weichhölzer.

Es ist vorteilhaft, wenn als zerkleinertes Holz zerkleinertes Kernholz verwendet wird. Als Kernholz wird das innere Holz eines Baumes bezeichnet. Es ist schwerer und fester als das Splintholz und hat gelegentlich eine andere Farbe.

Besonders vorteilhaft ist es, wenn das verwendete Holz, frei von Fehlern, wie beispielsweise Ästigkeit, Harzgallen, Risse, Fäulnis und weiteren Fehlern ist, die in der Holzstruktur und in der Stammform auftreten oder durch Umwelteinflüsse erzeugt werden.

Es hat sich gezeigt, das als zerkleinertes Holz bevorzugt Eichenholz verwendet werden sollte, da dieses die typischen Geschmacksstoffe beinhaltet, die auch bei einer natürlichen Lagerung von alkoholischen Getränken in Eichenfässern in die Getränke übergeht.

Es ist daher von Vorteil, wenn das Holz eines Baumes verwendet wird, welcher ein Alter von 70 bis 200 Jahren, vorzugsweise 80 bis 150 Jahre hat. Diese Bäume beinhalten die typischen Geschmacksstoffe in ihrem Holz. Ferner ist bei einem Baum mit einem Alter von über 70 Jahren das Kernholz soweit ausgeprägt und das nicht verwendete Splintholz kann für andere Verwendungen wie beispielsweise Furnier eingesetzt werden.

Die Erfindung umfaßt neben dem Verfahren zum Veredeln von wässrigen Zubereitungen einen Extrakt zur Veredelung von wässrigen Zubereitungen, welcher nach dem oben beschriebenen Verfahren herstellbar ist. Dieser Extrakt bewirkt eine sensorische Veränderung bei den zu veredelnden wässrigen Lösungen und trägt zu einer positiven Geschmacksentwicklung bei.

Auch sieht die Erfindung alkoholische Getränke und alkoholfreie Getränke vor, welche mit einem Extrakt zur Veredelung von wässrigen Zubereitungen behandelt worden sind. Dabei ist der Extrakt mittels eines Verfahrens wie oben geschildert herstellbar.

Den alkoholischen Getränken wird durch Zugabe des Extraktes eine Geschmacks- und Geruchsnote verliehen, die einer natürlichen Lagerung entspricht oder sehr nahe kommt. Durch Zugabe des Extraktes kann so auf einfache Art und Weise eine teure Lagerung vermieden werden und es ist die Herstellung von geschmacklich ansprechenden alkoholischen Getränken möglich ohne eine lange Lagerung.

Erfindungsgemäß sind auch Nahrungsergänzungsmittel denkbar, welche ebenfalls mit einem Extrakt veredelt worden sind, welches wie oben beschrieben herstellbar ist.

Die Erfindung wird nachfolgend genauer anhand eines Beispiels erläutert.

### Ausführungsbeispiel:

Es wird eine 100jährige Eiche, welche einen Stamm aufweist, der frei von Ästen ist, geschlagen. Anschließend erfolgt die Entrindung des Stammes und das Trennen des Splintolzes vom Kernholz. Dies kann durch Sägen oder Zerspanen des Holzes erfolgen, aber auch indem das Holz geschält wird.

Anschließend wird das Kernholz zerkleinert, so dass Eichenchips entstehen.

Diese Eichenchips werden mit kaltem Wasser gereinigt um eventuelle Rückstände oder Dreck zu entfernen.

Die Eichenchips werden dann auf einem Sieb in einem handelsüblichen Autoklav angeordnet. Der Autoklav ist mit Wasser befüllt, allerdings nur soweit, dass die Holzchips nicht mit dem Wasser in Berührung kommen und nicht aufquellen können, oder mit Wasser durchtränkt werden.

Anschließend wird die Gasphase des Autoklaven durch Einleiten von Stickstoff ausgetauscht und der Autoklav geschlossen.

Nun erfolgt das langsame Erhitzen der Eichenchips in dem Autoklaven. Hierzu wird im Autoklaven ein Druck von ca. 1,8 bar aufgebaut und die Temperatur langsam auf 127°C erhöht. Anschließend wird der Druck und die Temperatur für mindesten 2 Stunden beibehalten.

Der Autoklav wird nach den etwa 2 Stunden dann, ohne vorher abgekühlt zu werden, schlagartig geöffnet. Hierbei reißen die Zellen das Holzes auf. Im Sumpf des Autoklaven, also in dem Wasser am Boden, sammeln sich Polyphenole und weitere Gerbstoffe. Das durch das Autoklavieren depolymerisierte Lignin ist jedoch noch in den Eichenchips enthalten.

Nun erfolgt eine Perkulation auf kaltem Wege. Die Temperatur sollte hierbei 30 °C nicht überschreiten, da sonst weitere Stoffe durch die Wärme aus dem Holz gelöst werden könnten, die nicht in das Produkt gelangen sollen.

Hierbei ist zu beachten, dass die Eichenholzchips in einem Perkulator mit einem Teil der zu veredelnden wässrigen Lösung in Verbindung gebracht werden. Dieser Vorgang kann je nach Produkt einige Zeit in Anspruch nehmen.

Auch ist es denkbar, dass kontinuierlich über Säulen ein Teilproduktstrom über die behandelten Eichenholzchips geleitet wird und so eine Veredelung stattfindet.

Je nachdem welche wässrige Zubereitung veredelt werden soll und wie stark die Geschmacksänderung sein soll, unterscheiden sich die Mengen, die an Extrakt der zu veredelnden wässrigen Zubereitung zugegeben werden.

### Beispiel 1:

Zur sensorischen Verbesserung von Rheingauer Spätburgunder Rotwein wird dieser mit 0,5 vol% (=V/V%) des Extraktes, der mit dem oben beschriebenen Verfahren gewonnen worden ist, versetzt. Es ist eine deutliche Verbesserung des Geschmackes des Rotweines merkbar. Dieser wird noch intensiver und führt zu einer sehr deutlichen Verbesserung, wenn 1 vol% des Extraktes dem Rheingauer Spätburgunder Rotwein zugesetzt wird. Der veredelte Rotwein unterscheidet sich merklich von dem unveredelten Produkt und ist im Duo Test immer findbar und deutlich besser.

### Beispiel 2:

Ein italienischer Montepulciano wird mit 0,5 vol% (=V/V%) des Extraktes, der mit dem oben beschriebenen Verfahren gewonnen worden ist, versetzt. Durch den etwas maskierenden vollen Grundton wird die Unterscheidung zwischen dem veredelten Produkt und dem unveredelten im Duo Test bei längerem Probieren jedoch schwieriger. Eine deutliche Verbesserung ist jedoch bereits bemerkbar, wenn 1 vol% des Extraktes zugegeben wird.

### Beispiel 3:

Einem Kornbrand (38%vol) wird 0,1 vol% des Extraktes zugegeben. Es ist bereits bei dieser geringen Menge eine deutliche Abrundung im Geschmack merkbar und das Produkt, also der Kornbrand schmeckt weicher und angenehmer,

### Beispiel 4:

Ein Bourbon Whisky ( 1 day old/ keine Lagerung auf Holz), sehr kräftig, mit schon fast einem penetranten Geruch und Geschmack wird mit 1 vol% des Extraktes veredelt. Es ist hier sensorisch eine Lagerung mit einem leichten Vanille-Charakter erkennbar. Bei einer Zugabe von 2,5 vol% des Extraktes ist sensorisch eine deutliche Lagerung erkennbar, mit einem völlig verbessertem bzw. verändertem Geruchs- und Geschmacksprofil.

### Beispiel 5:

Ein Weindestillat, ungelagert ca. 36 vol% wird mit 0,5 vol% des Extraktes versetzt. Hier läßt sich sensorisch eine Lagerung erkennen und ein abgerundeter Geschmack entsteht. Bei Zugabe von 1 vol% ist sensorisch eine gute Verbesserung des Geruchs- und des Geschmacksprofils erkennbar.

Die hier dargestellten Ausführungsbeispiele stellen nur einige verwendungsmöglichkeiten der Erfindung dar. Die Erfindung soll jedoch nicht auf diese Beispiele beschränkt sein.

## Patentansprüche

1. Verfahren zum Veredeln von wässrigen Zubereitungen, insbesondere von alkoholischen Getränken,
umfassend die Schritte:
a) Bereitstellen von zerkleinertem Holz
b) Reinigen des zerkleinerten Holzes
c) Autoklavieren des Holzes,
d) Extraktion von Bestandteilen des Holzes, wobei die Extraktion mit ähnlichen Extraktionsmitteln und/oder der zu veredelnden wässrigen Zubereitung erfolgt,
**dadurch gekennzeichnet, dass** das Autoklavieren des Holzes in sauerstofffreier Atmosphäre mittels Inertgas in einem Autoklaven erfolgt.

2. Verfahren zum Veredeln von wässrigen Zubereitungen nach Anspruch 1, **dadurch gekennzeichnet, dass** das Bereitstellen von zerkleinertem und gereinigtem Holz, das Bereitstellen von Holzschnitzeln und/oder Holzchips umfaßt.

3. Verfahren zum Veredeln von wässrigen Zubereitungen nach einem der vorhergegangenen Ansprüche, **dadurch gekennzeichnet, dass** das Reinigen des zerkleinerten Holzes ein Reinigen mit kalten Wasser umfaßt.

4. Verfahren zum Veredeln von wässrigen Zubereitungen nach einem der vorhergegangenen Ansprüche, **dadurch gekennzeichnet, dass** als Inertgase Stickstoff, Argon oder Helium verwendet werden.

5. Verfahren zum Veredeln von wässrigen Zubereitungen nach einem der vorhergegangenen Ansprüche, **dadurch gekennzeichnet, dass** der Autoklav teilweise mit einer wässrigen Lösung, insbesondere Wasser befüllt wird.

6. Verfahren zum Veredeln von wässrigen Zubereitungen nach einem der vorhergegangenen Ansprüche, **dadurch gekennzeichnet, dass** durch Autoklavieren des Holzes ein langsames Erhitzen, mit einer Rate von bevorzugt 2 Kelvin pro Minute, des Holzes erfolgt.

7. Verfahren zum Veredeln von wässrigen Zubereitungen nach einem der vorhergegangenen Ansprüche, **dadurch gekennzeichnet, dass** das Autoklavieren des Holzes bei einer Temperatur von 90°C bis 140°C, vorzugsweise von 110°C bis 135°C, besonders bevorzugt von 120°C bis 130°C erfolgt.

8. Verfahren zum Veredeln von wässrigen Zubereitungen nach einem der vorhergegangenen Ansprüche, **dadurch gekennzeichnet, dass** das Holz derart oberhalb der wässrigen Lösung angeordnet wird, dass es nicht mit der wässrigen Lösung in Kontakt gebracht wird.

9. Verfahren zum Veredeln von wässrigen Zubereitungen nach einem der vorhergegangenen Ansprüche, **dadurch gekennzeichnet, dass** der Druck des Autoklaven bevorzugt zwischen 1,5 bar und 2 bar, besonders zwischen 1,7 bar und 1,9 bar, besonders bevorzugt bei 1,8 bar eingestellt wird.

10. Verfahren zum Veredeln von wässrigen Zubereitungen nach einem der vorhergegangenen Ansprüche, **dadurch gekennzeichnet, dass** das Holz für 1 Stunde bis 3 Stunden, bevorzugt für 1,5 Stunden bis 2,5 Stunden, bevorzugt für 2 Stunden autoklaviert wird.

11. Verfahren zum Veredeln von wässrigen Zubereitungen nach einem der vorhergegangenen Ansprüche, **dadurch gekennzeichnet, dass** am Ende des Autoklavieren ein schlagartiges Entspannen des Autoklaven erfolgt.

12. Verfahren zum Veredeln von wässrigen Zubereitungen nach einem der vorhergegangenen Ansprüche, **dadurch gekennzeichnet, dass** die Extraktion von Bestandteilen aus dem autoklavierten Holz in einer geeigneten Vorrichtung zur Extraktion, bevorzugt einem Perkulator oder einer Rieselkolonne durchgeführt wird, wobei die Extraktion mit ähnlichen Extraktionsmitteln und/oder der zu veredelnden wässrigen Zubereitung erfolgt.

13. Verfahren zum Veredeln von wässrigen Zubereitungen nach einem der vorhergegangenen Ansprüche, **dadurch gekennzeichnet, dass** die Extrationstemperatur auf einen Wert von < 35°C, bevorzugt 20°C bis 30°C eingestellt wird.

14. Verfahren zum Veredeln von wässrigen Zubereitungen nach einem der vorhergegangenen Ansprüche, **dadurch gekennzeichnet, dass** während der Extraktion ein Teilstrom abgeführt wird, der der zu veredelnden Flüssigkeit direkt zugeführt wird.

15. Verfahren zum Veredeln von wässrigen Zubereitungen nach einem der vorhergegangenen Ansprüche, **dadurch gekennzeichnet, dass** die bei der Extraktion gewonnenen Bestandteile der zu veredelnden wässrigen Zubereitungen zugegeben werden.

16. Verfahren zum Veredeln von wässrigen Zubereitungen nach einem der vorhergegangenen Ansprüche, **dadurch gekennzeichnet, dass** als zerkleinertes Holz vorzugsweise zerkleinertes Hartholz verwendet wird.

17. Verfahren zum Veredeln von wässrigen Zubereitungen nach einem der vorhergegangenen Ansprüche, **dadurch gekennzeichnet, dass** als zerkleinertes Holz zerkleinertes Kernholz verwendet wird.

18. Verfahren zum Veredeln von wässrigen Zubereitungen nach einem der vorhergegangenen Ansprüche, **dadurch gekennzeichnet, dass** als zerkleinertes Kernholz ein Kernholz, welches eine Holzstruktur, die frei von Fehlern, wie insbesondere Ästigkeit, Harzgallen aufweist, verwendet wird.

19. Verfahren zum Veredeln von wässrigen Zubereitungen nach einem der vorhergegangenen Ansprüche, **dadurch gekennzeichnet, dass** als zerkleinertes Holz Eichenholz verwendet wird.

20. Verfahren zum Veredeln von wässrigen Zubereitungen nach einem der vorhergegangenen Ansprüche, **dadurch gekennzeichnet, dass** ein Holz eines Baumes, welcher ein Alter von 70 bis 200 Jahren, vorzugsweise 80 bis 150 Jahre hat, verwendet wird.

21. Extrakt zur Veredelung von wässrigen Zubereitungen, insbesondere von alkoholhaltigen Getränken, hergestellt nach einem der Ansprüche 1 bis 20.

22. Alkoholisches Getränk, umfassend einen Extrakt zur Veredelung von wässrigen Zubereitungen nach Anspruch 21.

23. Alkoholfreies Getränk, umfassend einen Extrakt zur Veredelung von wässrigen Zubereitungen nach Anspruch 21.

24. Nahrungsergänzungsmittel, umfassend einen Extrakt zur Veredelung von wässrigen Zubereitungen nach Anspruch 21.

## Claims

1. A method for treating aqueous preparations, in particular alcoholic beverages, comprising the steps of:
(a) providing crushed wood;
(b) purifying said crushed wood;
(c) autoclaving said wood;
(d) extracting constituent parts of the wood, said extraction being performed by means of similar extraction means and/or said aqueous preparation to be treated;
**characterized in that** autoclaving of the wood is performed in an oxygen-free atmosphere by means of an inert gas in an autoclave.

2. The method for treating aqueous preparations of claim 1 **characterized in that** providing crushed and purified wood comprises providing wood scraps and/or wood chips.

3. The method for treating aqueous preparations according to any of the preceding claims, **characterized in that** purifying said crushed wood comprises purifying by means of cold water.

4. The method for treating aqueous preparations according to any of the preceding claims, **characterized in that** nitrogen, argon or helium is used as said inert gas.

5. The method for treating aqueous preparations according to any of the preceding claims, **characterized in that** said autoclave is partially filled with an aqueous solution, in particular water.

6. The method for treating aqueous preparations according to any of the preceding claims, **characterized in that** through autoclaving said wood, the wood is slowly heated with a rate of preferably 2 Kelvin per minute.

7. The method for treating aqueous preparations according to any of the preceding claims, **characterized in that** autoclaving the wood is performed at a temperature from 90 °C to 140 °C, preferably from 110 °C to 135 °C, more preferably from 120 °C to 130 °C.

8. The method for treating aqueous preparations according to any of the preceding claims, **characterized in that** said wood is arranged above said aqueous solution so that it is not contacted with the aqueous solution.

9. The method for treating aqueous preparations according to any of the preceding claims, **characterized in that** the pressure of said autoclave is set between 1.5 and 2 bars, preferably between 1.7 and 1.9 bars, more preferably at 1.8 bars.

10. The method for treating aqueous preparations according to any of the preceding claims, **characterized in that** said wood is autoclaved for 1 to 3 hours, preferably for 1.5 to 2.5 hours, more preferably for 2 hours.

11. The method for treating aqueous preparations according to any of the preceding claims, **characterized in that** at the conclusion of autoclaving, the autoclave pressure is relieved abruptly.

12. The method for treating aqueous preparations according to any of the preceding claims, **characterized in that** said extraction of constituent parts from the autoclaved wood is performed in a suitable extraction device, preferably in a perculator or scrubber, said extraction being performed by means of similar extraction means and/or said aqueous preparation to be treated.

13. The method for treating aqueous preparations according to any of the preceding claims, **characterized in that** the extraction temperature is set to a value below 35 °C, preferably 20 °C to 30 °C.

14. The method for treating aqueous preparations according to any of the preceding claims, **characterized in that** during extraction, a partial stream is discharged and is directly supplied to said liquid to be treated.

15. The method for treating aqueous preparations according to any of the preceding claims, **characterized in that** the constituent parts obtained from said extraction are added to the aqueous preparations to be treated.

16. The method for treating aqueous preparations according to any of the preceding claims, **characterized in that** preferably hardwood is used as said crushed wood.

17. The method for treating aqueous preparations according to any of the preceding claims, **characterized in that** crushed core wood is used as said crushed wood.

18. The method for treating aqueous preparations according to any of the preceding claims, **characterized in that** a core wood with a wood texture free of defects such as knurls, resin pockets, is used as said crushed core wood.

19. The method for treating aqueous preparations according to any of the preceding claims, **characterized in that** oak wood is used as said crushed wood.

20. The method for treating aqueous preparations according to any of the preceding claims, **characterized in that** wood of a tree of an age from 70 to 200 years, preferably 80 to 150 years, is used.

21. An extract for treating aqueous preparations, in particular alcoholic beverages, produced according to any of claims 1 through 20.

22. An alcoholic beverage comprising an extract for treating aqueous preparations according to claim 21.

23. An alcohol-free beverage comprising an extract for treating aqueous preparations according to claim 21.

24. A dietary supplement comprising an extract for treating aqueous preparations according to claim 21.

## Revendications

1. Procédé pour l'affinage de préparations aqueuses, en particulier de boissons alcoolisées, comprenant les étapes suivantes :
a) mise à disposition de bois broyé,
b) nettoyage du bois broyé,
c) passage à l'autoclave du bois,
d) extraction de composants du bois, l'extraction s'effectuant avec des agents d'extraction similaires et/ou avec la préparation aqueuse à affiner, **caractérisé en ce que** le passage à l'autoclave s'effectue dans une atmosphère sans oxygène au moyen de gaz inerte dans un autoclave.

2. Procédé pour l'affinage de préparations aqueuses selon la revendication 1, **caractérisé en ce que** la mise à disposition de bois broyé et nettoyé comprend la mise à disposition de copeaux de bois et/ou de pastilles de bois.

3. Procédé pour l'affinage de préparations aqueuses selon l'une quelconque des revendications précédentes, **caractérisé en ce que** le nettoyage du bois broyé comprend un nettoyage à l'eau froide.

4. Procédé pour l'affinage de préparations aqueuses selon l'une quelconque des revendications précédentes, **caractérisé en ce que** de l'azote, de l'argon ou de l'hélium est utilisé comme gaz inerte.

5. Procédé pour l'affinage de préparations aqueuses selon l'une quelconque des revendications précédentes, **caractérisé en ce que** l'autoclave est rempli partiellement avec une solution aqueuse, en particulier de l'eau.

6. Procédé pour l'affinage de préparations aqueuses selon l'une quelconque des revendications précédentes, **caractérisé en ce qu'**un lent réchauffement du bois, avec une progression de, de préférence, 2 Kelvins par minute, s'effectue par le passage à l'autoclave du bois.

7. Procédé pour l'affinage de préparations aqueuses selon l'une quelconque des revendications précédentes, **caractérisé en ce que** le passage à l'autoclave du bois s'effectue à une température de 90°C à 140°C, de préférence de 110°C à 135°C, avec une préférence particulière de 120°C à 130°C.

8. Procédé pour l'affinage de préparations aqueuses selon l'une quelconque des revendications précédentes, **caractérisé en ce que** le bois est disposé au-dessus de la solution aqueuse de telle sorte qu'il n'est pas mis en contact avec la solution aqueuse.

9. Procédé pour l'affinage de préparations aqueuses selon l'une quelconque des revendications précédentes, **caractérisé en ce que** la pression de l'autoclave est réglée de préférence entre 1,5 bar et 2 bar, notamment entre 1,7 bar et 1,9 bar, avec une préférence particulière à 1,8 bar.

10. Procédé pour l'affinage de préparations aqueuses selon l'une quelconque des revendications précédentes, **caractérisé en ce que** le bois est passé à l'autoclave pour 1 heure jusqu'à 3 heures, de préférence pour 1,5 heure jusqu'à 2,5 heures, de préférence pour 2 heures.

11. Procédé pour l'affinage de préparations aqueuses selon l'une quelconque des revendications précédentes, **caractérisé en ce qu'**une détente brusque de l'autoclave intervient à la fin du passage à l'autoclave.

12. Procédé pour l'affinage de préparations aqueuses selon l'une quelconque des revendications précédentes, **caractérisé en ce que** l'extraction de composants du bois passé à l'autoclave est effectuée dans un dispositif approprié pour l'extraction, de préférence un percolateur ou une colonne de lavage, l'extraction s'effectuant avec des agents d'extraction similaires et/ou la préparation aqueuse à affiner.

13. Procédé pour l'affinage de préparations aqueuses selon l'une quelconque des revendications précédentes, **caractérisé en ce que** la température d'extraction est réglée selon une valeur inférieure à 35°C, de préférence de 20°C à 30°C.

14. Procédé pour l'affinage de préparations aqueuses selon l'une quelconque des revendications précédentes, **caractérisé en ce qu'**un flux partiel, qui est amené directement au liquide à affiner, est évacué pendant l'extraction.

15. Procédé pour l'affinage de préparations aqueuses selon l'une quelconque des revendications précédentes, **caractérisé en ce que** les composants obtenus lors de l'extraction des préparations aqueuses à affiner, sont ajoutés.

16. Procédé pour l'affinage de préparations aqueuses selon l'une quelconque des revendications précédentes, **caractérisé en ce que** du bois dur broyé est utilisé de préférence comme bois broyé.

17. Procédé pour l'affinage de préparations aqueuses selon l'une quelconque des revendications précédentes, **caractérisé en ce que** du bois de coeur broyé est utilisé comme bois broyé.

18. Procédé pour l'affinage de préparations aqueuses selon l'une quelconque des revendications précédentes, **caractérisé en ce qu'**un bois de coeur, qui présente une structure de bois exempte de défauts, comme en particulier la nodosité, la poche de résine, est utilisé comme bois de coeur broyé.

19. Procédé pour l'affinage de préparations aqueuses selon l'une quelconque des revendications précédentes, **caractérisé en ce que** du bois de chêne est utilisé comme bois broyé.

20. Procédé pour l'affinage de préparations aqueuses selon l'une quelconque des revendications précédentes, **caractérisé en ce qu'**un bois d'un arbre, qui a un âge de 70 à 200 ans, de préférence de 80 à 150 ans, est utilisé.

21. Extrait pour l'affinage de préparations aqueuses, en particulier de boissons alcoolisées, fabriquées selon l'une quelconque des revendications 1 à 20.

22. Boisson alcoolisée comprenant un extrait pour l'affinage de préparations aqueuses, selon la revendication 21.

23. Boisson sans alcool, comprenant un extrait pour l'affinage de préparations aqueuses selon la revendication 21.

24. Complément alimentaire, comprenant un extrait pour l'affinage de préparations aqueuses selon la revendication 21.
